# EUROPEAN PATENT APPLICATION

(11) **EP 1 712 743 A2**
(43) Date of publication of application: **18.10.2006**
(21) Application number: 06251992.1
(22) Date of filing: 10.04.2006
(51) Int. Cl.: F01D 11/12, F16J 15/00, F01D 11/00

(54) **Turbine with an abradable seal between the rotor and a stationary component**

(30) Priority: 12.04.2005 US 103503
(71) Applicant: The General Electric Company, Schenectady NY 12345 (US)
(72) Inventor: Couture, Bernard Arthur, Schenectady, New York 12303 (US); Swan, Stephen, Clifton Park, New York 12065 (US); Kowalczyk, Mark William, Amsterdam, New York 12010 (US); Rivas, Flor del Carmen, Clifton park, New York 12065 (US)
(74) Representative: Bedford, Grant Richard

(57) **Abstract**

A seal (10) between rotary and stationary turbine (14, 12), components includes an abradable coating on the surface of the stationary component between axially spaced caulked-in seal strips. The rotatable component includes a plurality of axially spaced teeth (16) interdigitated with the teeth (18) of the stationary component and engaging the abradable coating on the stationary component in the cold condition of the turbine. The teeth on the stationary component have larger clearances to prevent mushrooming of the tips in the event of a transient condition. By utilizing caulked-in teeth, a larger number of seal teeth are provided for the same axial extent as compared with conventional labyrinth seal teeth.

## Description

The present invention relates generally to seals between a turbine rotor and a stationary component of the turbine and particularly to a seal having an abradable coating on the stationary component between caulked-in teeth in opposition to radial teeth on the rotor.

In turbines, particularly steam turbines, seals between rotary and stationary components are a critical part of steam turbine performance. It will be appreciated that the greater the number and magnitude of steam leakage paths, the greater the losses of efficiency of the steam turbine. Many and various types of sealing arrangements have been proposed and utilized for sealing between rotating and stationary turbine components. For example, high-low labyrinth seal teeth are often used in steam turbine interstage and shaft end packing. The clearances between the teeth and the opposed turbine component are typically sufficiently large to avoid any contact between the rotating and static parts. Tight clearances, however, lead to contact and rubs e.g., during transient operation of the turbine. Rubs, of course, lead to severe damage to the teeth, such as mushrooming resulting in much reduced sealing capability. On the other hand, large clearances lead to unwanted leakage paths of substantial magnitude which, in turn, affect the efficiency of the turbine. Therefore, cold clearances are typically set such that there is no contact between the rotating and stationary parts and particularly between the seal teeth and the opposed component. Accordingly, there has developed a need for a seal between rotatable and stationary components of a turbine which minimizes or eliminates the aforenoted problems and achieves an effective seal with reduced clearances and increased seal efficiency.

In a preferred embodiment of the present invention, there is provided a turbine comprising: a rotor; a stationary component; an end shaft seal between the rotor and the stationary component; the seal including (i) a plurality of teeth carried by the rotor at axially spaced locations therealong and projecting generally radially outwardly therefrom and (ii) a plurality of teeth carried by the stationary component at axially spaced locations therealong and projecting generally radially inwardly therefrom; the teeth carried by the rotor and the teeth carried by the stationary component being interdigitated and axially spaced from one another; and an abradable coating on the stationary component between the teeth thereof at locations in radial opposition to the teeth on the rotor.

In a further preferred embodiment of the present invention, there is provided a turbine comprising: a rotor; a stationary component; a seal between the rotor and the stationary component; the seal including (i) a plurality of teeth carried by the rotor at axially spaced locations therealong and projecting generally radially outwardly therefrom and (ii) a plurality of teeth formed by strips of metal mechanically secured to the stationary component at axially spaced locations therealong and projecting generally radially inwardly therefrom toward the rotor; the teeth carried by the rotor and the teeth strips carried by the stationary component being axially spaced from one another; and an abradable coating on the stationary component between the teeth strips at locations in radial opposition to the teeth on the rotor.

The invention will be better understood by referring to the accompanying drawings, in which:
FIGURE 1 is a fragmentary cross-sectional view illustrating a seal in accordance with a preferred embodiment of the present invention between a turbine rotor and a stationary component;
FIGURE 2 is a fragmentary enlarged cross-sectional view illustrating the seal;
FIGURE 3 is an enlarged view illustrating the abradable coating on both the rotating and stationary components; and
FIGURE 4 is a view similar to Figure 1 illustrating the seal between a spring-backed segment of the stationary component and the turbine rotor.

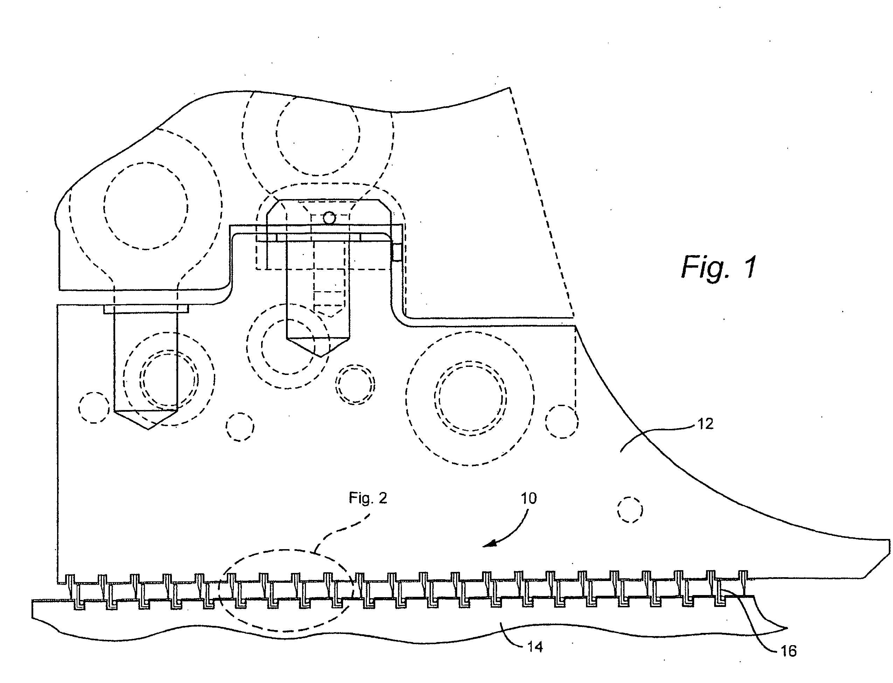

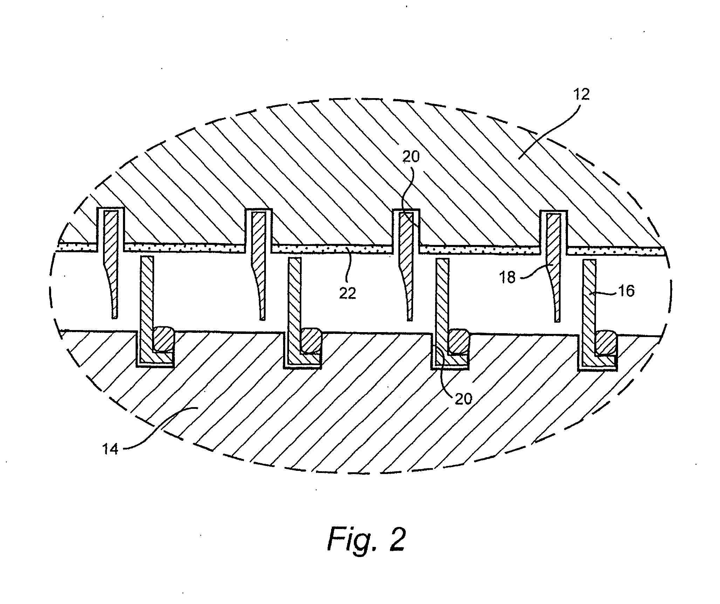

Referring now to the drawings, particularly to Figure 1, there is illustrated a seal generally designated 10 between a stationary component 12 of a turbine and a turbine rotor 14. While the seal 10 is illustrated as part of an end shaft seal between the stationary and rotary components, it will be appreciated that the seal may be employed at other locations in a turbine between stationary and rotary components. As illustrated, rotor 14 is provided with a plurality of axially spaced teeth 16. The teeth 16 may comprise caulked-in seal strips or teeth machined on the rotor. The seal teeth 18 on the stationary component 12 may also comprise axially spaced caulked-in teeth. By caulked-in teeth is meant strip-type seals which are mechanically connected to the associated seal part and disposed in grooves in the associated seal part. For example, the caulked-in seal teeth may comprise the flat strip seals 18, illustrated in Figure 2, or strip seals in an L or J-shaped configuration disposed in the groove 20 of a seal part. The metal of the seal per se may be deformed to complete the mechanical connection between the seal and the seal mounting component. Alternatively, an additional retainer, for example, a metal O ring may be deformed in the groove to bear against the seal strip securing the seal strip mechanically in the groove. These types of caulked-in seal strips are conventional and have been used in other sealing locations in a turbine

As illustrated in Figure 2, the caulked-in seal teeth 18 on the stationary component 12 interrupt an abradable coating 22 applied along the surface of the stationary component 12 in opposition to the surface of the rotor 14 and the teeth 16 carried thereby. Thus the abradable coating 22 is exposed on the surface of the stationary component 12 except where the caulked-in teeth are present. By utilizing the abradable coating 22 on the stationary component, the cold turbine clearances can be set tighter to enable the teeth 16 on the rotatable component 14 to lie in contact with the abradable coating 22 and cut a groove in the coating without any damage to the rotating teeth. Conversely, the clearances between the caulked-in teeth 18 on the stationary component 12 and the rotor surface are set to a larger degree to avoid contact between the teeth 18 and the rotor 14 and the possibility of mushrooming the teeth.

It will also be appreciated that with the arrangement of caulked-in teeth on at least the stationary component 12 or both the stationary and rotary components 12, 14 these strip seals provide more equivalent teeth within the same axial extent as in a conventional labyrinth seal teeth design. This is made possible because of the reduction in width i.e. in the axial direction of the strip seals at least on the stationary component or on both the stationary and rotary components in comparison with the width of conventional labyrinth seal teeth.

The abradable coating constitutes a sacrificial coating which is cut by the seal teeth on the rotary component without causing any damage to the teeth 16 of the rotary component 14. The abradable material may be of the type disclosed in U.S. patent No. 6,547,522 of common assignee herewith, the disclosure of which is incorporated herein by reference. Thus the abradable material may comprise a composition having a first component including aluminum, cobalt, nickel, chromium, yttrium and a second component selected from the group consisting of hexagonal boron nitride and a polymer. Any one of the additional abradable materials disclosed in U.S. patent No. 6,547,522 can be similarly utilized in the present invention. The abradable coating 22 is thermally sprayed on the stationary component. Other types of abradable seal systems may also be utilized such as fiber metals and honeycomb structures. Both fiber metals and honeycombs are applied by a brazing process.

Also as illustrated in Figure 2, it will be appreciated that the teeth 16 and 18 of the rotary and stationary components, respectively, are interdigitated relative to one another. While this arrangement is preferable, the seal teeth need not alternate and any one or more of either seal teeth 16 or 18 may be interposed between any adjacent pair of the opposing seal teeth.

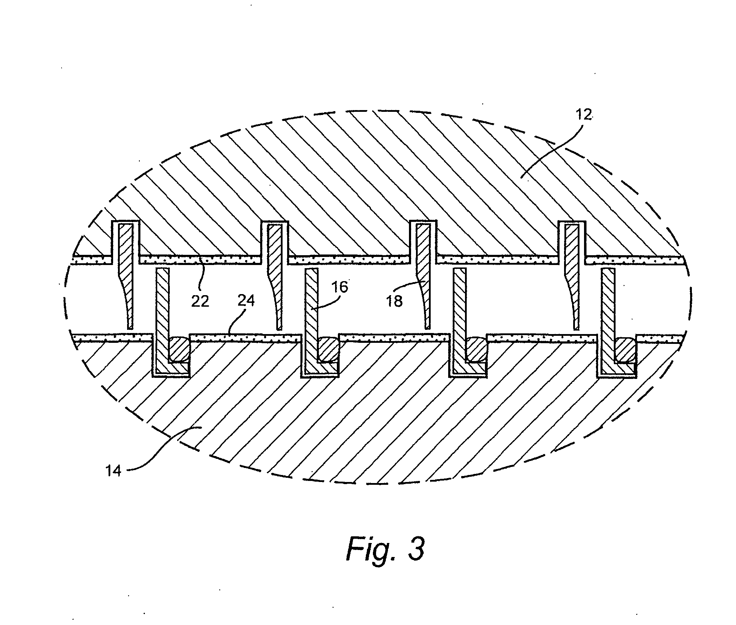

In Figure 3, the arrangement and type of seal teeth are the same as in Figure 2. In Figure 3, however, an identical or similar abradable coating 24 as coating 22 is also applied to the rotating component 14. Thus, the strip seal teeth 18 of the stationary component lie opposite the abradable coating 24.

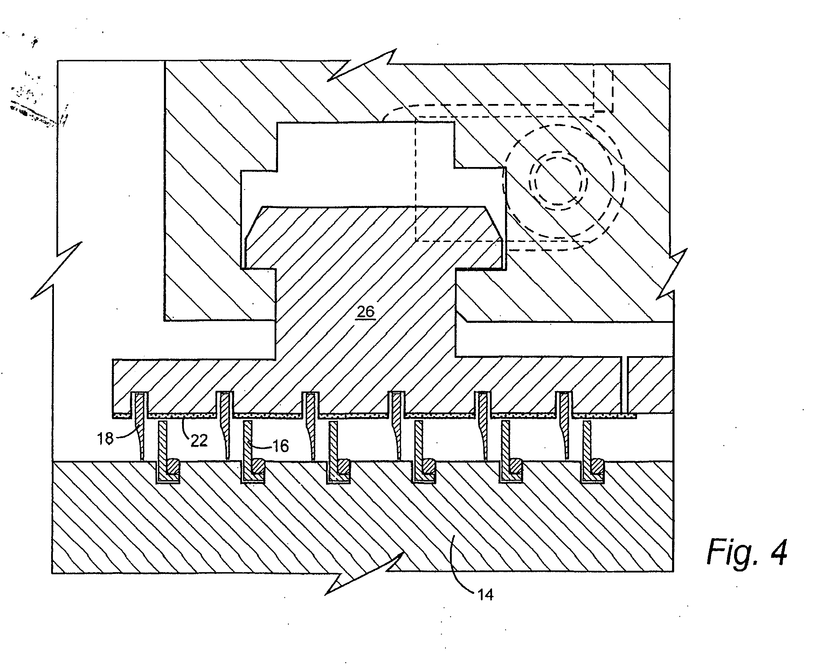

Referring now to Figure 4, there is illustrated the foregoing described seal arrangement between rotary and stationary components. However, in Figure 4, the teeth 18 on the stationary component are provided on a plurality of circumferentially extending seal segments 26. The seal segments 26 are typically spring backed to bias the segments toward the rotary component 14.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A turbine comprising:
a rotor (14);
a stationary component (12);
an end shaft seal (10) between said rotor and said stationary component;
said seal including (i) a plurality of teeth (16) carried by said rotor at axially spaced locations therealong and projecting generally radially outwardly therefrom and (ii) a plurality of teeth (18) carried by said stationary component at axially spaced locations therealong and projecting generally radially inwardly therefrom;
said teeth (16)carried by said rotor and said teeth (18)carried by said stationary component being interdigitated and axially spaced from one another; and
an abradable (22) coating on said stationary component between the teeth thereof at locations in radial opposition to the teeth on the rotor.

2. A turbine according to claim 1 wherein the teeth on at least one of said rotor and said stationary component includes strips of metal mechanically secured to said one of said rotor and said stationary component.

3. A turbine according to claim 2 wherein the teeth (16, 18) of said one of said rotor and said stationary component have a generally L-shaped configuration with a base of the L-shaped configuration imbedded in a groove in said one of said rotor and said stationary component.

4. A turbine according to any preceding claim wherein said stationary component includes a plurality of arcuate seal segments about said rotor, said teeth of said stationary component being carried by said seal segments, said seal segments being movable toward and away from said rotor.

5. A turbine according to any preceding claim wherein the teeth on said rotor in a cold condition of the turbine project radially from said rotor into contact with the abradable coating.

6. A turbine according to any preceding claim wherein the teeth on said rotor and said stationary component include strips of metal mechanically secured respectively to said rotor and said stationary component.

7. A turbine according to any preceding claim including an abradable coating (24) on said rotor between the teeth thereof at locations in radial opposition to the teeth carried by the stationary component.

8. A turbine comprising:
a rotor (14);
a stationary component (12);
a seal (100) between said rotor and said stationary component;
said seal including (i) a plurality of teeth (16) carried by said rotor at axially spaced locations therealong and projecting generally radially outwardly therefrom and (ii) a plurality of teeth (18) formed by strips of metal mechanically secured to said stationary component at axially spaced locations therealong and projecting generally radially inwardly therefrom toward said rotor; said teeth carried by said rotor and said teeth strips carried by said stationary component being axially spaced from one another; and
an abradable coating (22) on said stationary component between said teeth strips at locations in radial opposition to the teeth on said rotor.

9. A turbine according to claim 8 or claim 9 wherein said teeth (16) on said rotor and said teeth (18) strips on said stationary component are interdigitated.

10. A turbine according to claim 8 or claim 9 wherein said teeth strips on said stationary component have a generally L-shaped configuration with a base of the L being imbedded in a groove on the stationary component.

11. A turbine according to any one of claims 8 to 10 wherein the teeth on said rotor comprise metal strips mechanically secured to said rotor.

12. A turbine according to any one of claims 8 to 11 wherein said teeth on said rotor in a cold condition of the turbine project radially outwardly in contact with the abradable coating on the stationary component.

13. A turbine according to any one of claims 8 to 12 including an abradable coating (24) on said rotor between the teeth thereof at locations in radial opposition to the teeth carried by the stationary component.
